(19) Europäisches Patentamt
European Patent Office
Office européen des brevets

(11) **EP 2 268 082 B1**

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(51) Int Cl.:
***H04W 36/24*** *(2009.01)*

(21) Anmeldenummer: **09163796.7**

(22) Anmeldetag: **25.06.2009**

(54) **Verfahren und Einrichtung zur Optimierung des Handover-Verhaltens in einem Mobilfunknetz**

Method and apparatus for optimising the hand-over procedure in a mobile wireless network

Procédé et dispositif d'optimisation du comportement de passage dans un réseau radio mobile

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**29.12.2010 Patentblatt 2010/52**

(73) Patentinhaber: **Deutsche Telekom AG**
**53113 Bonn (DE)**

(72) Erfinder:
- **Belschner, Jakob**
  **65934 Frankfurt (DE)**
- **Arnold, Paul**
  **61231 Bad Nauheim (DE)**
- **Murugesan, Jhanani**
  **65199 Wiesbaden (DE)**

(74) Vertreter: **Vossius & Partner**
**Siebertstrasse 4**
**81675 München (DE)**

(56) Entgegenhaltungen:
**WO-A-2008/042013**

- **BELSCHNER J ET AL: "Optimisation of Radio Access Network Operation Introducing Self-x Functions: Use Cases, Algorithms, Expected Efficiency Gains" 2009 IEEE 69TH VEHICULAR TECHNOLOGY CONFERENCE; APRIL 26-29, 2009, BARCELONA, SPAIN, IEEE, PISCATAWAY, NJ, USA, 26. April 2009 (2009-04-26), Seiten 1-5, XP031474694 ISBN: 978-1-4244-2517-4**
- **3GPP: "3rd Generation Partnership Project; Technical Specification Group Services and System Aspects; Telecommunications Management; Self-Optimization OAM; Concepts and Requirements (Release 9)" 3GPP TS 32.521 V1.0.0 (2009-05), 6. Juni 2009 (2009-06-06), Seiten 1-25, XP002557665**
- **3GPP: "3rd Generation Partnership Project; Technical Specification Group Radio Access Network; Evolved Universal Terrestrial Radio Access Network (E-UTRAN); Self-configuring and self-optimizing network use cases and solutions (Release 9)" 3GPP TR 36.902 V1.2.0 (2009-05), 6. Juni 2009 (2009-06-06), Seiten 1-23, XP002557666**
- **ANDRÉ SCHRÖDER ET AL: "Distributed Self-Optimization of Handover for the Long Term Evolution" SELF-ORGANIZING SYSTEMS, SPRINGER BERLIN HEIDELBERG, BERLIN, HEIDELBERG, Bd. 5343, 10. Dezember 2008 (2008-12-10), Seiten 281-286, XP019113422 ISBN: 978-3-540-92156-1**

**Beschreibung**

Gebiet der Erfindung

Die Erfindung betrifft Verfahren zur Optimierung des Handover-Verhaltens in einem Mobilfunknetz. Insbesondere betrifft die Erfindung die Vermeidung von fehlerhaften Handover, oder unnötigen Handover, sogenannte Ping-Pong-Handover.

Hintergrund der Erfindung

Eine wesentliche Funktion eines Mobilfunknetzes ist die Mobilitätsunterstützung, die es ermöglicht, die Mobilfunkverbindung einer Mobilstation (MS) aufrecht zu erhalten, auch wenn sich dieses aus dem Empfangsbereich einer Basisstation (BS) in den Empfangsbereich einer anderen Basisstation bewegt. Zu diesem Zweck wird ein sogenannter Handover (HO) durchgeführt, d.h. die Verbindung einer Mobilstation zu einer Basisstation A wird zu einem definierten Zeitpunkt an eine Basisstation B weitergegeben.

Im Rahmen eines Handovers treten hauptsächlich zwei Arten von Fehler auf. Zunächst sind dies unnötige Handover (so genannte Ping-Pong-Effekte), d.h. ein mehrfacher, unnötiger Wechsel einer Mobilstation zwischen zwei oder mehr Basisstationen. Ping-Pong-Effekte führen zu unnötigem Austausch von Verwaltungsnachrichten und sollten daher vermieden werden. Ein Verfahren zur Erkennung dieser Effekte ist beispielsweise in der DE-A-10 2007 038 099 beschrieben. Eine weitere Fehlerart sind fehlerhafte Handover (sogenannte Handover-Fehler), die zum Verlust der Verbindung einer Mobilstation führen können. Diese treten beispielsweise auf, wenn ein Handover zu früh oder zu spät durchgeführt wird, so dass die Funkversorgung durch Basisstation A oder Basisstation B zum Zeitpunkt des Handovers nicht sichergestellt werden kann. Handover-Fehler führen in jedem Fall zur Unterbrechung der Verbindung einer Mobilstation, im Extremfall auch zum Verbindungsverlust und sollten daher vermieden werden. Die Erkennung von Handover-Fehlern ist schon seit längerem Stand der Technik.

Die Entscheidung, ob ein Handover durchgeführt wird und auch der Zeitpunkt, zu dem dieser durchgeführt wird, hängt von mehreren Parametern, den so genannten Handover-Parametern ab. Konfigurationswerte für diese Parameter sind im Mobilfunknetz hinterlegt (in Netzen nach dem zukünftigen Standard LTE beispielsweise in jeder Basisstation, in Netzen nach dem UMTS-Standard in einer übergeordneten Netzkomponente, dem Radio Network Controller - RNC). Gängige Konfigurationsparameter sind die sogenannte *hysteresis margin,* oder die die sogenannte *time to trigger.* Die hysteresis margin (Hysterese-Grenze) drückt aus, wie viel stärker die von der Mobilstation empfangene Sendeleistung bzw. Feldstärke der Ziel-Basisstation (entspricht der oben genannten Basisstation B) im Vergleich zur empfangenen Sendeleistung der Quell-Basisstation (entspricht Basisstation A) sein muss, bevor ein Handover durchgeführt wird (siehe z.B. die DE-A-10 2007 038 099). Die time to trigger drückt aus, wie lange (z.B. wie viele Millisekunden) die empfangene Sendeleistung der Ziel-Basisstation an der Mobilstation um *hysteresis margin* größer sein muss als die empfangene Sendeleistung der Quell-Basisstation, bevor ein Handover durchgeführt wird.

Neben diesen Beispiel-Parametern, die aufgeführt wurden, da sie in den meisten Mobilfunksystemen auftreten, kann eine Vielzahl weiterer Parameter existieren.

Die Einstellungen dieser Konfigurationsparameter haben entscheidenden Einfluss auf die Ausführung der Handover eines Mobilfunknetzes und beeinflussen daher auch, wie viele Ping-Pong-Effekte und Handover-Fehler auftreten. Aus diesem Grund werden in Netzen nach dem Stand der Technik in regelmäßigen Abständen manuell die Statistiken über aufgetretene Ping-Pong-Effekte und Flandover-Fehler ausgewertet und im Falle von ungewöhnlich hohen Werten die Parametereinstellungen optimiert. Dies hat wesentliche Nachteile. So geht ein hoher Anteil manueller Vorgehensweise mit damit verbundenen hohen Kosten einher. Außerdem kann es sinnvoll sein, die Konfigurationswerte der Handover-Parameter kurzfristig zu verändern, falls sich Zustände im Netz verändern (z.R. Autobahnstau, der zu einer kurzfristig verringerten Geschwindigkeit der Mobilstation führt). Dies ist nach dem Stand der Technik so gut wie nicht möglich.

Um diesen Nachteile entgegenzuwirken sind sogenannte Selbstoptimierungsverfahren Gegenstand aktueller Forschung (siehe z.B. das EU Förderprojekt Self-Optimisation & Self-Configuration in wireless networks (SOCRATES): Self-optimisation in future mobile access networks, Presentation at Mobile Network Optimisation 2008, Cannes, France, November 03-06, 2008). Im Bezug auf Handover-Parameter bedeutet dies, dass es für das Netz wünschenswert wäre in der Lage zu sein, selbstständig die Konfigurationswerte der Parameter zu optimieren. Erste Ansätze dazu sind beispielsweise in DE-A-10 2007 038 099 (Absatz [0012]: "Verfahren zur Vermeidung von Ping-Pong-Hand-Over in Mobilfunknetzen, ..., derart weiter zu bilden, dass die Parameter, insbesondere die Hysterese der Emnfannsfeldstärke.... zur Vermeidung von Ping-Pong-Hand-Over automatisch selbstständig eingestellt werden ...") und US-A-2004/066434 (hier wechselt der Konfigurationswert des Parameters "Hysteresis" zwischen zwei festen Werten) bzw. in BELSCHNER J ET AL: "Optimisation of Radio Access Network Operation Introducing Self-x Functions: Use Cases, Algorithms, Expected Efficiency Gains", 2009 IEEE 69TH VEHICULAR TECHNOLOGY CONFERENCE; APRIL 26-29, 2009, BARCELONA, SPAIN, IEEE, PISCATAWAY, NJ, USA, 26. April 2009 (2009-04-26), Seiten 1-5, XP031474694, zu finden.

Zusammenfassung der Erfindung

Der Erfindung liegt die Aufgabe zugrunde, ein Verfahren bereitzusteilen, dass das Handover-Verhalten in einem Mobilfunknetz optimiert. Diese Aufgabe wird mit einem Verfahren nach den Patentansprüchen gelöst.

Das vorliegende Verfahren betrifft Mobilfunknetze, in denen die Handover-Parameter in einer Basisstation oder eine übergeordneten Netzkomponente festgelegt werden (z.B. Netze nach dem GSM, UTMS, LTE Standard). Es wird vorzugsweise in einer einzelnen Basisstation angewendet und für eine Selbstoptimierung der Handover-Parameter dieser Basisstation sorgen. Alternativ wird das erfindungsgemäße Verfahren in einer übergeordneten Netzkomponente angewendet, die mit mehreren Basisstationen verbunden ist und deren Handover-Parameter festlegt. Sofern eine übergeordnete Netzkomponente in der Lage ist, separate Handover-Parameter für jede der von ihr kontrollierten Basisstationen festzusetzen, kann das Verfahren die Handover Parameter jeder dieser Basisstationen einzeln optimieren. Sollte es nur möglich sein, Handover-Parameter für eine Gruppe von Basisstationen festzulegen, werden die Handover-Parameter dieser Gruppe optimiert.

Das erfindungsgemäße Verfahren ist dabei nicht auf die Optimierung der beiden eingangs erwähnten Parameter beschränkt. Im Gegenteil ist einer der Hauptvorteile, dass das erfindungsgemäße Verfahren beliebige Parameter optimieren kann.

Die Erfindung stellt ein Verfahren zur Optimierung des Handover-Verhaltens in einem Mobilfunknetz bereit, mit den Schritten:

a) Ermitteln, während eines vorgegebenen Zeitraums, des Handover-Verhaltens mindestens einer Basisstation des Mobilfunknetzes bei aktuellen Konfigurationswerten der Handover-Parameter der mindestens einen Basisstation;

b) Bewerten der Konfiguration der mindestens einen Basisstation auf der Grundlage des ermittelten Handover-Verhaltens;

c1) für den Fall, dass Schritt b) ergibt, dass kein Optimierungsbedarf besteht: Wiederholen der Schritte a) und b); oder

c2) für den Fall, dass Schritt b) ergibt, dass Optimierungsbedarf besteht, Setzen eines Optimierungsparameters, A, auf einen Maximalwert, Amax;

d) Modifizieren der Konfigurationswerte mindestens eines Handover-Parameters;

e) Ermitteln, während eines vorgegebenen Zeitraums, des Handover-Verhaltens der mindestens einen Basisstation des Mobilfunknetzes bei modifizierten Konfigurationswerten der Handover-Parameter der mindestens einen Basisstation;

f) Bewerten der modifizierten Konfiguration der mindestens einen Basisstation auf der Grundlage des ermittelten Handover-Verhaltens;

g) Vergleichen der Bewertungsergebnisse ohne und mit der Modifikation der Konfigurationswerte;

h1) Akzeptieren der modifizierten Konfiguration mit einer von der aktuellen Höhe des Optimierungsparameters, A, abhängigen Wahrscheinlichkeit, sofern Schritt g) ergibt, dass die modifizierte Konfiguration schlechter ist als die vorherige Konfiguration, und Fortfahren mit Schritt i); oder

h2) Akzeptieren der modifizierten Konfiguration und Überprüfen, ob das Bewertungsergebnis der modifizierten Konfiguration ein Abbruchkriterium erfüllt, sofern Schritt g) ergibt, dass die modifizierte Konfiguration bessor ist als die vorherige Konfiguration;

i) Verringern des Optimierungsparameters, A; und

j) Wiederholen der Schritte d) bis i).

Vorzugsweise werden in den Schritten a) und e) auftretende Fehler wie fehlerhafte Handover oder unnötige Handover ermittelt, wobei insbesondere eine Handover-Fehler rate oder eine Ping-Pong-Rate ermittelt wird. In den Schritten b) und f) erfolgt die Bewertung der jeweiligen Konfiguration anhand einer Bewertungsfunktion, in die die auftretenden Fehler, insbesondere Raten einfließen. In Schritt b) erfolgt dabei ferner vorzugsweise ein Schritt des Vergleichens des Bewertungsergebnisses mit mindestens einem Schwellenwert hinsichtlich der Notwendigkeit einer Optimierung des Handover-Verhaltens. Falls keine Optimierung des Handover-Verhaltens erforderlich ist, werden die aktuellen Handover-Parameter beibehalten und das Verfahren mit Schritt a) fortgeführt.

Gemäß einer bevorzugten Ausführungsform erfolgt in Schritt d) die Modifikation der Konfigurationswerte durch i) Auswählen eines ersten Handover-Parameters, ii) Auswählen, ob der ausgewählte Parameter erhöht oder verringert werden soll, iii) entsprechendes erhöhen oder Verringern des Parameterwertes um den kleinstmöglichen Schritt, iv) gegebenenfalls Wiederholen der Schritte i) bis iii) für mindestens einen weiteren Handover-Parameter.

In Schritt h2) erfolgt ein Schritt des Vergleichens des Bewertungsergebnisses der modifizierten Konfiguration mit mindestens einem Schwellenwert hinsichtlich der Beendigung der Optimierung des Handaver-Verhaltens. Falls eine Beendigung der Optimierung des Handover-Verhaltens möglich ist, werden die modifizierten Handover-Parameter übernommen und das Verfahren mit Schritt a) fortgeführt, und falls eine Beendigung der Optimierung des Handover-Verhaltens noch nicht möglich ist, die modifizierten Handover-Parameter übernommen und das Verfahren mit Schritt i) fortgeführt.

Vorzugsweise werden für den Beginn der Optimierung und die Beendigung der Optimierung unterschiedliche Schwellenwerte verwendet.

Die Konfigurationswerte der Handover-Parameter werden gemäß einer Ausführungsform in einer übergeordneten Netzkomponente gespeichert. Alternativ werden sie jeweils lokal in der jeweiligen Basisstation gespeichert. Jede der Basisstationen weist dazu eine Softwarekomponente auf, wobei die jeweilige Softwarekomponente die Bestimmung und lokale Speicherung der Konfigurationswerte der Handover-Parameter durchführt.

Als Handover-Parameter werden vorzugsweise die Hysterese-Grenze, hysteresis margin, und Umschaltschwelle, time to trigger, betrachtet.

Ferner stellt die Erfindung eine Netzwerkkomponente in einem Mobilfunknetz bereit zur Optimierung des Handover-Verhaltens in dem Mobilfunknetz. Die Netzwerkkomponente weist auf:

eine Einrichtung zum Ermitteln, während eines vorgegebenen Zeitraums, des Handover-Verhaltens mindestens einer Basisstation des Mobilfunknetzes bei aktuellen Konfigurationswerten der Handover-Parameter der mindestens einen Basisstation;

einer Bewertungseinrichtung zum Bewerten der Konfiguration der mindestens einen Basisstation auf der Grundlage des ermittelten Handover-Verhaltens;

eine Stelleinrichtung zum Setzen eines Optimierungsparameters, A, auf einen Maximalwert, Amax;

eine Einrichtung zum Modifizieren der Konfigurationswerte mindestens eines Handover-Parameters; wobei die Ermittlungseinrichtung, während eines vorgegebenen Zeitraums, das Handover-Verhalten der mindestens einen Basisstation des Mobilfunknetzes bei modifizierten Konfigurationswerten der Handover-Parameter der mindestens einen Basisstation ermittelt und die Bewertungseinrichtung die modifizierte Konfiguration der mindestens einen Basisstation auf der Grundlage des ermittelten Handover-Verhaltens bewertet;

eine Vergleichseinrichtung zum Vergleichen der Bewertungsergebnisse ohne und mit der Modifikation der Konfigurationswerte,

wobei die Netzwerkkomponente eingerichtet ist, 1) die modifizierte Konfiguration mit einer von der aktuellen Höhe des Optimierungsparameters, A, abhängigen Wahrscheinlichkeit zu akzeptieren, sofern die modifizierte Konfiguration schlechter ist als die vorherige Konfiguration, oder 2) zu überprüfen, ob das Bewertungsergebnis der modifizierten Konfiguration ein Abbruchkriterium erfüllt, sofern die modifizierte Konfiguration besser ist als die vorherige Konfiguration; und

wobei die Netzwerkkomponente eingerichtet ist, die Optimierung anschließend mit einem verringerten Optimierungsparameter A fortzuführen.

Die Erfindung ermöglicht eine automatische Beibstoptimierung mehrerer Handover-Parameter in Bezug auf mehrere Ziele. Es ist damit beispielsweise möglich, die Handover-Parameter *hysteresis margin* und *time to trigger* gleichzeitig zu optimieren, mit dem Ziel sowohl Ping-Pong-Effekte als auch Handover-Fehcer zu minimieren. Mit Verfahren nach dem Stand der Technik ist es hingegen nur möglich, einen Parameter mit einem Ziel zu optimieren.

Vorteile der erfindungsgemäßen Selbstoptimierung mehrerer Parameter mit mehreren Zielen sind:

- Generelle Vorteile der Selbstoptimierung (kein manueller Aufwand, Reaktion auf kurzfristige Änderungen, siehe Problembeschreibung)
- Durch die gleichzeitige Verwendung mehrerer Parameter zur Optimierung lassen sich bessere Ergebnisse erzielen als bei der Optimierung nur eines Parameters.
- In einer praktischen Umsetzung ist es äußerst wichtig, mehrere Ziele gleichzeitig zu verfolgen, da der Einfluss der Handover-Parameter auf die Ziele oft gegenläufig ist. Werden in einem Netz beispielsweise Handover-Parameter nur mit dem Ziel optimiert, Ping-Pong-Effekte zu vermeiden, führt dies oft zu einer stark erhöhten Zahl an Handover-Fehlern.
- Es muss bei Einsatz der hier beschriebenen Erfindung nicht bekannt sein, wie sich eine Änderung der Handover-Parameter auf das Handover-Verhalten auswirkt. Die DE-A-10 2007 038 099 gibt z.B. an, dass im Falle von zu vielen Ping-Pong-Effekten, der Parameter "Hysteresis" erhöht wird. Dies setzt voraus, dass bekannt ist, dass eine Erhöhung der Konfigurationswerte dieses Parameters Ping-Pong-Effekte vermeidet. Bei einer Vielzahl von Parametern und Zielen ist es wahrscheinlich, dass nicht bekannt ist, wie sich eine Änderung der Parameter auswirken wird. Verfahren wie in DE-A-10 2007 038 099 beschrieben funktionieren in diesem Falle nicht mehr.
- Zusammenfassend lässt sich also sagen, dass Verfahren nach dem Stand der Technik darauf basieren, im Falles eines erkannten Problems bekannte Lösungsansätze umzusetzen (siehe z.B. die DE-R-10 2007 038 099: Im Falle von zu vielen Ping-Pong-Effekten wird der Parameter "Hysteresis" erhöht, da dies aus gewonnenen Erfahrungen als wirksam gilt). Im Gegensatz dazu ist das dieser Erfindung zugrundeliegende Verfahren heuristisch. Es ist daher in der Lage, selbstständig eine Lösung für ein auftretendes Problem zu finden.

Die Erfindung wird nun anhand der beigefügten Zeichnungen näher erläutert. Es zeigen:

Fig. 1 eine Darstellung einer bevorzugten Ausführungsform des erfindungsgemäßem Verfahrens; und
Fig. 2 ein beispielhaftes Mobilfunknetz zur Veranschaulichung des erfindungsgemäßen Verfahrens.

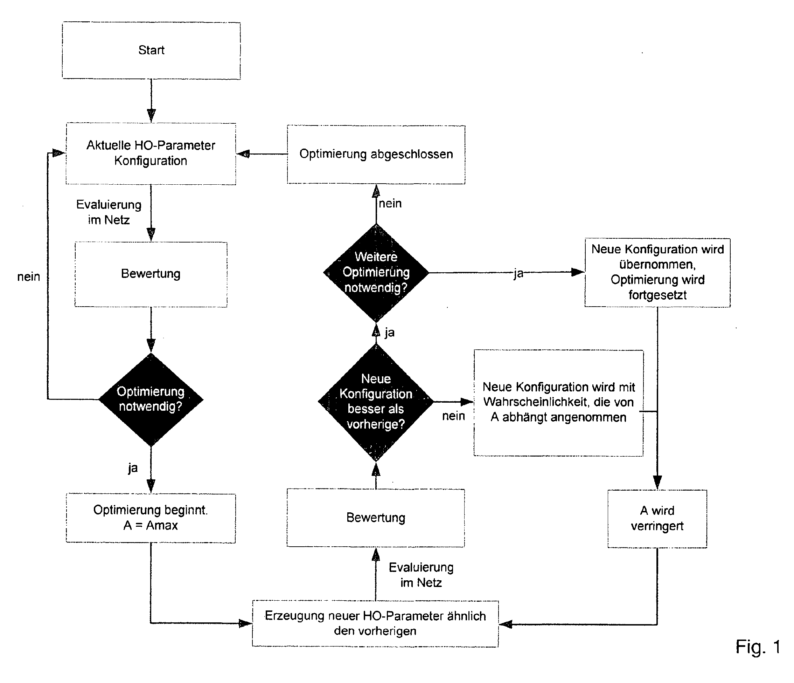

Im Folgenden wird nun das in Fig. 1 dargestellte erfindungsgemäße Verfahren anhand einer bevorzugten Ausführungsform schrittweite näher erläutert. Es wird dabei der Fall von Handover-Parametern angenommen, die spezifisch für eine Basisstation sind. Für den Fall, dass nur Handover-Parameter für eine Gruppe von Basisstationen festgelegt werden können, ist Basisstation durch "Gruppe von Basisstationen" zu ersetzen.

1. Zu Beginn liegt bereits eine Konfiguration der Handover-Parameter vor. Diese kann bereits im Netz konfiguriert sein, extern vorgegeben oder zufällig erzeugt werden.

2. Sofern noch nicht geschehen, werden die Handover-Parameter in der Basisstation konfiguriert.

3. In einer festgelegten Zeit (z.B. 1 Minute) wird gemessen, welches Handover-Verhalten sich mit den aktuellen Handover-Parametern ergibt (z.B.: wie viele Ping-Pong-Effekte und Handover-Fehler aufgetreten sind). Aus diesen Messwerten werden nach einer definierten Bewertungsfunktion ein oder mehrere Werte berechnet, die wiedergeben, wie sehr das Handover-Verhalten mit den aktuellen Handover-Parametern den zu erreichenden Zielen entspricht. Die Bewertungsfunktion spiegelt also die vorgegebenen Ziele der Optimierung wieder.

4. Es wird nun überprüft, ob die aktuelle Konfiguration akzeptabel ist oder eine Optimierung notwendig ist. Dies kann z.B. erfolgen, in dem das Ergebnis der Bewertung mit Schwellenwerten verglichen wird.

5. Sofern keine Optimierung notwendig ist, werden die aktuellen Handover-Parameter beibehalten. Es wird aber weiterhin kontinuierlich das aktuelle Verhalten überprüft und bewertet (Sprung zu Punkt 3) um im Falle von Änderungen im Netz reagieren zu können.

6. Sofern die Optimierung notwendig ist, wird zunächst der Optimierungsparameter A auf einen festgelegten Maximalwert gesetzt.

7. Anschließend werden neue Konfigurationswerte für die Handover-Parameter erzeugt. Diese sollten nur eine geringe Abweichung zu den vorherigen haben, um zu verhindern, dass vorkommen ungeeignete Einstellungen im Netz konfiguriert werden. Eine mögliche bevorzugte Vorgehensweise zur Erzeugung der neuen Konfiguration ist:

a. Beginnen mit dem ersten zu optimierenden Handover-Parameter. Zufällig Auswahl, ob Parameter erhöht oder verringert werden soll.
b. Handover-Parameter um den kleinstmöglichen Schritt erhöhen bzw. verringern
c. Mit nächstem Parameter bei a beginnen.

8. Die neue Konfiguration wird nun, wie in den Schritten 2 und 3 beschrieben, konfiguriert und bewertet.

9. Analyse des neuen Bewertungsergebnisses

a. Sofern das Bewertungsergebnis der neuen Konfiguration schlechter ist als das der vorherigen wird die neue Konfiguration mit einer Wahrscheinlichkeit akzeptabel, die von der aktuellen Höhe des Optimierungsparameters A abhängt. Je höher A ist, desto höher ist die Wahrscheinlichkeit, dass die neue Konfiguration (obwohl sie schlechter ist als die vorherige) angenommen wird. Dies erfolgt, um zu verhindern, dass neue Konfigurationen vorschnell ausgeschlossen werden, obwohl sie im Laufe der weiteren Optimierung durchaus zu guten Ergebnissen führen könnten.
b. Falls das Bewertungsergebnis der neuen Konfiguration besser als das der vorherigen ist, wird überprüft ob das neue Ergebnis bereits die Kriterien für eine Beendigung der Optimierung erfüllt. Falls dies der Fall ist, wird zu Punkt 2 gesprungen. Falls nicht, wird die neue Konfiguration zwar übernommen, die Optimierung aber fortgesetzt.

10. Der Optimierungsparameter A wird nun verringert. Dies führt dazu, dass die Wahrscheinlichkeit, mit der schlechtere Konfigurationen angenommen werden, sinkt.

11. Sprung zu Punkt 7.

Wie in Fig. 1 zu erkennen ist, handelt es sich vorzugsweise um einen kontinuierlichen Prozess. D.h. es wird ständig überprüft, ob die Handover-Parameter einer Basisstation zu einem akzeptablen Handover-Verhalten führen. Falls dies nicht der Fall sein sollte, werden neue, optimierte Parameter erzeugt und konfiguriert. Die Erfindung umfasst aber ebenfalls eine diskontinuierliche Durchführung des Verfahrens.

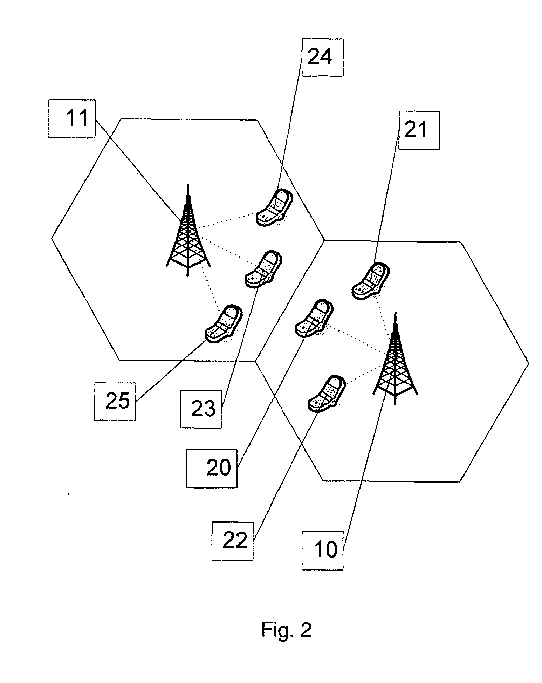

In Fig. 2 wird das erfindungsgemäße Verfahren anhand eines Beispiels näher erläutert.

Fig. 2 zeigt zwei Basisstationen 11 und 12 und sechs Mobilstationen 20 bis 25. Mobilstationen 20 bis 22 sind dabei mit Basisstation 10 verbunden, Mobilstationen 23 bis 25 mit Basisstation 11. Alle Mobilstationen befinden sich aber im Grenzgebiet zwischen Basisstation 10 und 11, d.h. die Funkfeldstärken der Basisstationen 10 und 11 an den Positionen der Mobilstation sind ähnlich. Die Handover-Parameter sind in den Basisstationen abgelegt, d.h. Basisstation 10 und 11 besitzen jeweils eigene Handover Parameter. Die Handover-Parameter gelten für alle Mobilstationen, die mit einer Basisstation verbunden sind. Für Mobilstationen 20 bis 22 gelten daher die Handover-Parameter der Basisstation 10, für Mobilstationen 23 bis 25 die Handover-Parameter der Basisstation 11. Das erfindungsgemäße Verfahren zur automatischen Selbstoptimierung der Handover-Parameter arbeitet jeweils autonom in Basisstation 10 und 11.

In diesem Beispiel werden die beiden Handover-Parameter *hysteresis margin (hm)* und *time to trigger (ttt)* betrachtet. Es ist durch Erfahrungen im Betrieb von Mobilfunknetzen bekannt, dass niedrige Konfigurationswerte dieser Parameter zu wenigen Handover-Fehlern führen, allerdings auch zu vielen Ping-Pong-Effekten. Dies gilt auch umgekehrt: Hohe Konfigurationswerte führen in der Regel zu wenigen Ping-Pong-Effekten, aber zu vielen Handover-Fehlern. Das erfindungsgemäße Verfahren setzt allerdings ausdrücklich nicht voraus, dass diese Auswirkungen der Handover-Parameter auf das Handover-Verhalten bekannt sind. Die genannten Auswirkungen sind daher hier nur zu Erklärungszwecken ausgeführt.

In diesem Beispiel wird weiterhin angenommen, dass ein Ping-Pong-Effekt oder Handover-Fehler, der bei einem Handover zwischen Basisstation 10 und 11 auftritt, von beiden Basisstationen erkannt wird. Je nach Mobilfunkstandard kann es sein, dass einzelne Basisstationen nur Teile dieser Effekte ermitteln können (z.B. könnte es sein, dass Basisstation 10 nur Handover-Fehler für Handover von Basisstation 10 nach Basisstation 11 erkennen kann, nicht jedoch Fehler für Handover von Basisstation 11 nach Basisstation 10). In diesem Fall kann das Verfahren auf Basis der vorhandenen Teilinformationen durchgeführt werden.

Als Startkonfiguration wird in diesem Ausführungsbeispiel angenommen, dass sowohl hm als auch ttt auf den niedrigst möglichen Wert gesetzt wird, also z.B. hm = 0 dB, ttt = 0 ms. Folgende Schritte werden nun durchlaufen:

1. In beiden Basisstationen wird für eine vorgegeben Zeit (z.B. eine Minute) untersucht, welche Handover sich mit den gesetzten Parametern ergeben. In diesem Beispiel angenommenes Ergebnis:

   a. Mobilstation 21 wechselt zu Basisstation 11 und anschließend wieder zurück zu Basisstation 10. D.h beide Handover waren unnötig.
   b. Mobilstation 24 wechselt von Basisstation 11 zu Basisstation 10.
   c. Es wird weiterhin angenommen, dass alle Handover erfolgreich sind, d.h. keine Handover-Fehler auftreten.
   d. Damit ergibt sich: Handover-Fehlerrate: 0%, Ping-Pong-Rate: 66% (die Handover der Mobilstation 21 waren beide unnötig, nur der Handover der Mobilstation 24 war notwenig).

2. Es wird nun überprüft, ob die aktuelle Konfiguration akzeptabel ist oder eine Optimierung notwendig ist. In diesem Beispiel wird angenommen, dass eine Handover-Fehlerrate von 5% und eine Ping-Pong-Rate von 10% akzeptiert werden können. Aufgrund der Überschreitung der maximal zulässigen Ping-Pong-Rate wird die Optimierung gestartet.

3. Der Optimierungsparameter A wird auf seinen Maximalwert gesetzt, z.B. 30.

4. Es werden nun in beiden Basisstationen neue Konfigurationswerte für die Handover-Parameter erzeugt. Wie vorstehend beschrieben, sollten diese ähnlich den vorherigen Werten sein. In diesem Beispiel wird angenommen, dass die Konfigurationswerte jeweils um einen Schritt erhöht werden. Für ein Netz nach dem LTE-Standard ergibt dies beispielsweise: hm = 1dB, ttt = 10ms (der LTE-Standard schreibt Werte vor).

5. Seide Basisstationen übernehmen die neuen Konfigurationswerte und überprüfen das Handover-Verhalten (analog zu 1). Angenommenes Ergebnis:

a. Ping-Pong-Rate:50%
b. Handover-Fehlerrate: 10%

6. Es muss nun bewertet werden, ob die neue Konfiguration bessere Ergebnisse erzielt, als die vorherige. Dies kann beispielsweise mit Gleichung 1 ermittelt werden.

$$Bewertung = \frac{1}{10 \bullet Fehlerrate + Ping - Pong - Rate} \quad (1)$$

Es ergibt sich: Alte Konfiguration: Bewertung: 1/66
Neue Konfiguration: 1/150

7. Die neue Konfiguration erhält also ein schlechteres (niedrigeres) Bewertungsergebnis. Aufgrund des hohen Optimierungsparameters A (der die Wahrscheinlichkeit bestimmt, mit der auch schlechtere Konfigurationen akzeptiert werden), wird die neue Konfiguration in diesem Beispiel trotzdem übernommen.

8. Der Optimierungsparameter A wird nun reduziert (z.B. auf 25).

9. Es werden wiederum neue Parameter in den Basisstationen 10 und 11 erzeugt. Z.B. in Basisstation 10: hm = 2 dB, ttt = 0ms, in Basisstation 11: hm=2dB, ttt = 20ms.

10. Der Optimierungsprozess wird nach dem vorgegebenen Muster so lange fortgeführt, bis Werte erreicht werden, die akzeptable Handover-Fehler- und Ping-Pong-Raten nicht mehr überschreiten.

11. Sobald dies erreicht ist, wird die Optimierung beendet. Es wird aber weiterhin kontinuierlich überprüft, ob (z.B. aufgrund von Änderungen der Randbedingungen im Netz) eine erneute Optimierung notwendig ist. Sollte dies der Fall, sein, wird entsprechend zu Punkt 0 gesprungen und die Optimierung von neuem gestartet.

Es ist hierbei vorzugsweise möglich, unterschiedliche Kriterien für die Beendigung der Optimierung (Punkt 10) und den Beginn der Optimierung (Punkt 2) zu definieren.

**Patentansprüche**

1.   Verfahren zur Optimierung des Handover-Verhaltens in einem Mobilfunknetz, mit den Schritten:

a) Ermitteln, während eines vorgegebenen Zeitraums, des Handover-Verhaltens mindestens einer Basisstation des Mobilfunknetzes bei aktuellen Konfigurationswerten der Handover-Parameter der mindestens einen Basisstation;
b) Bewerten der Konfiguration der mindestens einen Basisstation auf der Grundlage des ermittelten Handover-Verhaltens;
c1) für den Fall, dass Schritt b) ergibt, dass kein Optimierungsbedarf besteht: Wiederholen der Schritte a) und b); oder
c2) für den Fall, dass Schritt b) ergibt, dass Optimierungsbedarf besteht, Setzen eines Optimierungsparameters, A, auf einen Maximalwert, Amax;
d) Modifizieren der Konfigurationswerte mindestens eines Handover-Parameters;
e) Ermitteln, während eines vorgegebenen Zeitraums, des Handover-Verhaltens der mindestens einen Basisstation des Mobilfunknetzes bei modifizierten Konfigurationswerten der Handover-Parameter der mindestens einen Basisstation;
f) Bewerten der modifizierten Konfiguration der mindestens einen Basisstation auf der Grundlage des ermittelten Handover-Verhaltens;
g) Vergleichen der Bewertungsergebnisse ohne und mit der Modifikation der Konfigurationswerte;
h1) Akzeptieren der modifizierten Konfiguration mit einer von der aktuellen Höhe des Optimierungsparameters, A, abhängigen Wahrscheinlichkeit, sofern Schritt g) ergibt, dass die modifizierte Konfiguration schlechter ist als die vorherige Konfiguration, und Fortfahren mit Schritt i); oder
h2) Akzeptieren der modifizierten Konfiguration und Überprüfen, ob das Bewertungsergebnis der modifizierten Konfiguration ein Abbruchkriterium erfüllt, sofern Schritt g) ergibt, dass die modifizierte Konfiguration besser ist als die vorherige Konfiguration;
i) Verringern des Optimierungsparameters, A; und
j) Wiederholen der Schritte d) bis i).

2. Verfahren nach Anspruch 1, wobei in den Schritten a) und e) auftretende Fehler wie fehlerhafte Handover oder unnötige Handover ermittelt werden, wobei insbesondere eine Handover-Fehlerrate oder eine Ping-Pong-Rate ermittelt wird

3. Verfahren nach Anspruch 2, wobei in den Schritten b) und f) die Bewertung der jeweiligen Konfiguration anhand einer Bewertungsfunktion erfolgt, in die die auftretenden Fehler und Ping-Pong-Effekte, insbesondere Raten einfließen.

4. Verfahren nach Anspruch 3, wobei Schritt b) ferner einen Schritt des Vergleichens des Bewertungsergebnisses mit mindestens einem Schwellenwert hinsichtlich der Notwendigkeit einer Optimierung des Handover-Verhaltens aufweist.

5. Verfahren nach Anspruch 4, wobei falls keine Optimierung des Handover-Verhaltens erforderlich ist, die aktuellen Handover-Parameter beibehalten werden und das Verfahren mit Schritt a) fortgeführt wird.

6. Verfahren nach einem der vorstehenden Ansprüche, wobei in Schritt d) die Modifikation der Konfigurationswerte erfolgt durch i) Auswählen eines ersten Handover-Parameters, ii) Auswählen, ob der ausgewählte Parameter erhöht oder verringert werden soll, iii) entsprechendes Erhöhen oder Verringern des Parameterwertes um den kleinstmöglichen Schritt, iv) gegebenenfalls Wiederholen der Schritte i) bis iii) für mindestens einen weiteren Handover-Parameter

7. Verfahren nach einem der vorstehenden Ansprüche, wobei in Schritt h2) einen Schritt des Vergleichens des Bewertungsergebnisses der modifizierten Konfiguration mit mindestens einem Schwellenwert hinsichtlich der Beendigung der Optimierung des Handover-Verhaltens aufweist.

8. Verfahren nach Anspruch 7, wobei falls eine Beendigung der Optimierung des Handover-Verhaltens möglich ist, die modifizierten Handover-Parameter übernommen werden und das Verfahren mit Schritt a) fortgeführt wird, und falls eine Beendigung der Optimierung des Handover-Verhaltens noch nicht möglich ist, die modifizierten Handover-Parameter übernommen werden und das Verfahren mit Schritt i) fortgeführt wird.

9. Verfahren nach einem der Ansprüche 4 bis 8, wobei für den Beginn der Optimierung und die Beendigung der Optimierung unterschiedliche schwellenwerte verwendet werden.

10. Verfahren nach einem der vorstehenden Ansprüche, wobei die Konfigurationswerte der Handover-Parameter in einer übergeordneten Netzkomponente gespeichert sind.

11. Verfahren nach einem der Ansprüche 1 bis 10, wobei die Konfigurationswerte der Handover-Parameter jeweils lokal in der jeweiligen Basisstation gespeichert sind.

12. Verfahren nach einem der vorstehenden Ansprüche, wobei jede der Basisstationen eine Softwarekomponente aufweist, wobei die jeweilige Softwarekomponente die Bestimmung und lokale Speicherung der Konfigurationswerte der Handover-Parameter durchführt.

13. Verfahren nach einem der vorstehenden Ansprüche, wobei das Mobilfunknetz ein GSM-, UMTS- oder LTE-Mobilfunknetz oder WiMAX-Netzwerk ist.

14. Verfahren nach einem der vorstehenden Ansprüche, wobei als Handover-Parameter die Hysterese-Grenze, hysteresis margin, und Umschaltschwelle, time to triggen, verwendet werden.

15. Netzwerkkomponente in einem Mobilfunknetz zur Optimierung des Handover-Verhaltens in dem Mobilfunknetz, mit:

einer Einrichtung zum Ermitteln, während eines vorgegebenen Zeitraums, des Handover-Verhaltens mindestens einer Basisstation des Mobilfunknetzes bei aktuellen Konfigurationswerten der Handover-Parameter der mindestens einen Basisstation;

einer Bewertungseinrichtung zum Bewerten der Konfiguration der mindestens einen Basisstation auf der Grundlage des ermittelten Handover-Verhaltens;

einer Stelleinrichtung zum Setzen eines Optimierungsparameters, A, auf einen Maximalwert, Amax;

einer Einrichtung zum Modifizieren der Konfigurationswerte mindestens eines Handover-Parameters; wobei die Ermittlungseinrichtung, während eines vorgegebenen Zeitraums, das Handover-Verhalten der mindestens einen Basisstation des Mobilfunknetzes bei modifizierten Konfigurationswerten der Handover-Parameter der mindestens einen Basisstation ermittelt und die Bewertungseinrichtung die modifizierte Konfiguration der mindestens einen Basisstation auf der Grundlage des ermittelten Handover-Verhaltens bewertet;

einer Vergleichseinrichtung zum Vergleichen der Bewertungsergebnisse ohne und mit der Modifikation der Konfigurationswerte,

wobei die Netzwerkkomponente eingerichtet ist, 1) die modifizierte Konfiguration mit einer von der aktuellen Höhe des Optimierungsparameters, A, abhängigen Wahrscheinlichkeit zu akzeptieren, sofern die modifizierte Konfiguration schlechter ist als die vorherige Konfiguration, oder 2) zu überprüfen, ob das Bewertungsergebnis der modifizierten Konfiguration ein Abbruchkriterium erfüllt, sofern die modifizierte Konfiguration besser ist als die vorherige Konfiguration; und

wobei die Netzwerkkomponente eingerichtet ist, die Optimierung anschließend mit einem verringerten Optimierungsparameter A fortzuführen.

## Claims

1. A method for optimising the handover behaviour in a mobile radio network, comprising the steps of:

   a) determining, during a given period of time, the handover behaviour of at least one base station of the mobile radio network, with current configuration values of the handover parameters of the at least one base station;

   b) evaluating the configuration of the at least one base station based on the determined handover behaviour;

   c1) in the case that step b) does not indicate any need for optimisation: repeating the steps a) and b); or

   c2) in the case that step b) indicates the need for optimisation: setting an optimisation parameter A to a maximum value Amax;

   d) modifying the configuration values of at least one handover parameter;

   e) determining, during a given period of time, the handover behaviour of the at least one base station of the mobile radio network, with modified configuration values of the handover parameters of the at least one base station;

   f) evaluating the modified configuration of the at least one base station based on the determined handover behaviour;

   g) comparing the evaluation results without and with modification of the configuration values; h1) accepting the modified configuration with a probability depending on the current level of the optimisation parameter A, if step g) indicates that the modified configuration is worse than the preceding configuration, and continuing with step i); or

   h2) accepting the modified configuration and checking whether the evaluation result for the modified configuration fulfils a termination criterion, if step g) indicates that the modified configuration is better than the preceding configuration;

   i) reducing the optimisation parameter A; and

   j) repeating steps d) to i).

2. The method according to claim 1, wherein errors occurring in steps a) and e), such as erroneous handovers or unnecessary handovers, are determined, wherein particularly a handover error rate or a ping-pong rate is determined.

3. The method according to claim 2, wherein the evaluation of the respective configuration in steps b) and f) is effected on the basis of an evaluation function that takes into account the occurring errors and ping-pong effects, in particular their rates.

4. The method according to claim 3, wherein step b) further comprises a step of comparing the evaluation result with at least one threshold value with respect to the necessity of an optimisation of the handover behaviour.

5. The method according to claim 4, wherein the current handover parameters will be maintained and the method continued with step a) if no optimisation of the handover behaviour is necessary.

6.   The method according to any one of the preceding claims, wherein the modification of the configuration values in step d) is effected by i) selecting a first handover parameter, ii) choosing whether the selected parameter should be increased or reduced, iii) accordingly increasing or reducing the parameter value by the smallest possible step, iv) possibly repeating the steps i) to iii) for at least one further handover parameter.

7.   The method according to any one of the preceding claims, wherein step h2) includes a step of comparing the evaluation result for the modified configuration with at least one threshold value with respect to the termination of the optimisation of the handover behaviour.

8.   The method according to claim 7, wherein, if a termination of the optimisation of the handover behaviour is possible, the modified handover parameters are applied and the method is continued with step a), and, if a termination of the optimisation of the handover behaviour is not yet possible, the modified handover parameters are applied and the method is continued with step i).

9.   The method according to any one of claims 4 to 8, wherein different threshold values are used for the initiation of the optimisation and the termination of the optimisation.

10.  The method according to any one of the preceding claims, wherein the configuration values of the handover parameters are stored in a superordinate network component.

11.  The method according to any one of claims 1 to 10, wherein the configuration values of the handover parameters are in each case stored locally in the respective base station.

12.  The method according to any one of the preceding claims, wherein each of the base stations has a software component, the respective software component performing the determination and local storage of the configuration values for the handover parameters.

13.  The method according to any one of the preceding claims, wherein the mobile radio network is a GSM, UMTS or LTE mobile radio network or a WiMAX network.

14.  The method according to any one of the preceding claims, wherein the hysteresis margin (hysteresis threshold) and the time to trigger (switchover threshold) are used as handover parameters.

15.  A network component in a mobile radio network for optimising the handover behaviour in the mobile radio network, comprising:

a device for determining, during a given period of time, the handover behaviour of at least one base station of the mobile radio network, with current configuration values of the handover parameters of the at least one base station;
an evaluation device for evaluating the configuration of the at least one base station based on the determined handover behaviour;
a setting device for setting an optimisation parameter A to a maximum value Amax;
a device for modifying the configuration values of at least one handover parameter; wherein the determination device determines, during a given period of time, the handover behaviour of the at least one base station of the mobile radio network with modified configuration values of the handover parameters of the at least one base station, and the evaluation device evaluates the modified configuration of the at least one base station based on the determined handover behaviour;
a comparing device for comparing the evaluation results without and with the modification of the configuration values,
wherein the network component is adapted 1) to accept the modified configuration with a probability depending on the current level of the optimisation parameter A, if the modified configuration is worse than the preceding configuration, or 2) to check whether the evaluation result for the modified configuration fulfils a termination criterion, if the modified configuration is better than the preceding configuration; and
wherein the network component is adapted to subsequently continue the optimisation with a reduced optimisation parameter A.

**Revendications**

1. Procédé d'optimisation du comportement de transfert intercellulaire (handover) dans un réseau de radiocommunication mobile, comprenant les étapes :

   a) détermination, pendant un laps de temps prédéterminé, du comportement de transfert d'au moins une station de base du réseau de radiocommunication mobile, les valeurs de configuration des paramètres de transfert de 1a au moins une station de base étant des valeurs actuelles ;
   b) évaluation de la configuration de la au moins une station de base selon le comportement de transfert déterminé ;
   c1) dans l'hypothèses où l'étape b) révèle que le besoin d'optimisation est nul : répétition des étapes a) et b) ; ou
   c2) dans l'hypothèse où l'étape b) révèle qu'il existe un besoin d'optimisation : réglage d'un paramètre d'optimisation, A, à une valeur maximale, Amax ;
   d) modification des valeurs de configuration d'au moins un paramètre de transfert ;
   e) détermination, pendant un laps de temps prédéterminé, du comportement de transfert de la au moins une station de base du réseau de radiocommunication mobile, les valeurs de configuration des paramètres de transfert de la au moins une station de base étant des valeurs modifiées ;
   f) évaluation de la configuration modifiée de la au moins une station de base selon le comportement de transfert déterminé ;
   g) comparaison des résultats de l'évaluation sans et avec la modification des valeurs de configuration ;
   h1) acceptation de la configuration modifiée avec une probabilité qui dépend de la valeur actuelle du paramètre d'optimisation, A, si l'étape g) révèle que la configuration modifiée est moins bonne que la configuration précédente, et poursuite à l'étape i) ; ou
   h2) acceptation de la configuration modifiée et vérification si le résultat de l'évaluation de la configuration satisfait à un critère d'abandon, si l'étape g) révèle que la configuration modifiée est meilleure que la configuration précédente ;
   i) réduction du paramètre d'optimisation, A ; et
   j) répétition des étapes d) à i).

2. Procédé selon la revendication 1, dans lequel des erreurs apparaissant aux étapes a) et e) telles que des transferts erronés ou des transferts inutiles sont déterminés, notamment un taux d'erreur de transfert ou un effet ping-pong.

3. Procédé selon la revendication 2, dans lequel l'évaluation de la configuration respective s'effectue aux étapes b) et f) moyennant une fonction d'évaluation intégrant les erreurs et les effets ping-pong qui apparaissent, notamment les débits.

4. Procédé selon la revendication 3, l'étape b) comprenant en plus une étape de comparaison du résultat de l'évaluation avec au moins une valeur seuil pour la nécessité d'une optimisation du comportement de transfert.

5. Procédé selon la revendication 4, dans lequel les paramètres de transfert actuels sont maintenus et le procédé est poursuivi à l'étape a), si aucune optimisation du comportement de transfert n'est nécessaire.

6. Procédé selon l'une des revendications précédentes, dans lequel la modification des valeurs de configuration à l'étape d) s'effectue par i) le choix d'un premier paramètre de transfert, ii) le choix si le paramètre doit être augmenté ou réduit, iii) l'augmentation ou la réduction de la valeur du paramètre du plus petit pas possible, iv) si nécessaire, la répétition des étapes i) à iii) pour au moins un autre paramètre de transfert.

7. Procédé selon l'une des revendications précédentes, dans lequel l'étape h2) comprend une étape de comparaison du résultat de l'évaluation de la configuration modifiée avec au moins une valeur seuil pour l'arrêt de l'optimisation du comportement de transfert.

8. Procédé selon la revendication 7, dans lequel les paramètres de transfert modifiés sont appliqués et le procédé est poursuivi à l'étape a), si un arrêt de l'optimisation du comportement de transfert est possible, et dans lequel les paramètres de transfert modifiés sont appliqués et le procédé est poursuivi à l'étape i), si un arrêt de l'optimisation du comportement de transfert n'est pas possible.

9. Procédé selon l'une des revendications 4 à 8, dans lequel des valeurs seuils distincts sont utilisées pour le début et l'arrêt de l'optimisation.

**10.** Procédé selon l'une des revendications précédentes, dans lequel les valeurs de configuration des paramètres de transfert sont stockées dans une composante supérieure du réseau.

**11.** Procédé selon l'une des revendications 1 à 10, dans lequel les valeurs de configuration des paramètres de transfert sont stockées localement dans la station de base respective.

**12.** Procédé selon l'une des revendications précédentes, dans lequel chaque station de base comprend une composante logicielle, chacune des composantes logicielles assurant la détermination et le stockage local des valeurs de configuration des paramètres de transfert.

**13.** Procédé selon l'une des revendications précédentes, dans lequel le réseau de radiocommunication mobile est un réseau de radiocommunication mobile GSM, UMTS ou LTE ou un réseau WiMAX.

**14.** Procédé selon l'une des revendications précédentes, dans lequel les paramètres de transfert utilisés sont la marge d'hystérésis (hysteresis margin) et le seuil de déclenchement (time to trigger).

**15.** Composante de réseau dans un réseau de radiocommunication mobile pour l'optimisation du comportement de transfert dans le réseau de radiocommunication mobile, comprenant :

un dispositif de détermination pour déterminer, pendant un laps de temps prédéterminé, le comportement de transfert d'au moins une station de base du réseau de radiocommunication mobile, les valeurs de configuration des paramètres de transfert de la au moins une station de base étant des valeurs actuelles ;
un dispositif d'évaluation pour évaluer la configuration de la au moins une station de base selon le comportement de transfert déterminé ;
un dispositif de réglage pour régler un paramètre d'optimisation, A, à une valeur maximale, Amax ;
un dispositif pour modifier les valeurs de configuration d'au moins un paramètre de transfert, le dispositif de détermination déterminant, pendant un laps de temps prédéterminé, le comportement de transfert de la au moins une station de base du réseau de radiocommunication mobile, les valeurs de configuration des paramètres de transfert de la au moins une station de base étant modifiés, et le dispositif d'évaluation évaluant la configuration modifiée de la au moins une station de base selon le comportement de transfert déterminé ;
un dispositif de comparaison pour comparer les résultats de l'évaluation sans et avec la modification des valeurs de configuration,
la composante de réseau étant adaptée 1) pour accepter la configuration modifiée avec une probabilité qui dépend de la valeur actuelle du paramètre d'optimisation, A, si la configuration modifiée est moins bonne que la configuration précédente, ou 2) pour vérifier si le résultat de l'évaluation de la configuration modifiée satisfait à un critère d'abandon si la configuration modifiée est meilleure que la configuration précédente ; et la composante de réseau étant adaptée pour poursuivre ensuite l'optimisation à l'aide d'un paramètre d'optimisation, A, réduit.

EP 2 268 082 B1

```
                    ┌─────────────────┐
                    │      Start      │
                    └────────┬────────┘
                             │
                             ▼
  nein    ┌──────────────────────┐      ┌──────────────────────┐
  ┌───────│ Aktuelle HO-Parameter│◄─────│ Optimierung          │
  │       │ Konfiguration        │      │ abgeschlossen        │
  │       └──────────┬───────────┘      └──────────────────────┘
  │      Evaluierung │                              ▲ nein
  │      im Netz     ▼                              │
  │       ┌──────────────────────┐         ◆ Weitere
  │       │      Bewertung       │           Optimierung
  │       └──────────┬───────────┘           notwendig?    ─── ja ──►
  │                  ▼                              ▲
  │            ◆ Optimierung                        │ ja
  │              notwendig?                   ◆ Neue
  │                  │ ja                       Konfiguration      nein
  │                  ▼                          besser als    ────►
  │       ┌──────────────────────┐             vorherige?
  └──────►│ Optimierung beginnt. │                   ▲
          │ A = Amax             │            ┌───────┴──────┐
          └──────────┬───────────┘            │  Bewertung   │
                     │                        └───────▲──────┘
                     │                 Evaluierung    │
                     │                 im Netz        │
                     └────►┌─────────────────────────────────┐
                           │ Erzeugung neuer HO-Parameter     │
                           │ ähnlich den vorherigen           │◄──
                           └─────────────────────────────────┘
```

Start

Aktuelle HO-Parameter Konfiguration

Optimierung abgeschlossen

Evaluierung im Netz

Bewertung

Optimierung notwendig?

Optimierung beginnt. A = Amax

nein

ja

Weitere Optimierung notwendig?

nein

ja

Neue Konfiguration wird übernommen, Optimierung wird fortgesetzt

ja

Neue Konfiguration besser als vorherige?

nein

Neue Konfiguration wird mit Wahrscheinlichkeit, die von A abhängt angenommen

Bewertung

Evaluierung im Netz

Erzeugung neuer HO-Parameter ähnlich den vorherigen

A wird verringert

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007038099 A
- US 2004066434 A

- DE R102007038099

**In der Beschreibung aufgeführte Nicht-Patentliteratur**

- EU Förderprojekt Self-Optimisation & Self-Configuration in wireless networks (SOCRATES): Self-optimisation in future mobile access networks. *Presentation at Mobile Network Optimisation 2008,* 03. November 2008

- **BELSCHNER J et al.** Optimisation of Radio Access Network Operation Introducing Self-x Functions: Use Cases, Algorithms, Expected Efficiency Gains. *2009 IEEE 69TH VEHICULAR TECHNOLOGY CONFERENCE,* 26. April 2009, 1-5